# EUROPEAN PATENT APPLICATION

(11) **EP 2 281 462 A1**
(43) Date of publication of application: **09.02.2011**
(21) Application number: 10425265.5
(22) Date of filing: 02.08.2010
(51) Int. Cl.: A22B 5/20, B23D 55/00, B23Q 11/08

(54) **Machine for fleshes processing**

(30) Priority: 04.08.2009 IT VI20090208
(71) Applicant: La Felsinea S.r.L., Piazzola sul Brenta (PD) (IT)
(72) Inventor: Marzaro, Luca, Piazzola sul Brenta (PD) (IT)
(74) Representative: Iannone, Carlo Luigi

(57) **Abstract**

A machine for fleshes processing, such as, in particular, a bone saw, comprising an operating motor of a blade (17), passing inside a top work (22), and a machine body (7), to which at least a pulley (4, 34) is fixed, by means of a support pin (6, 23, 47), inserted into an opening (20, 36) of the machine body (7), together with sealing means (5, 24, 46), and by means of a locking screw (1), fixed onto the pulley (4, 34) from the part of the machine at operator' disposal; in particular, inside said machine body (7), from the part opposite to that one at operator's disposal at least a first flange (26, 30) is fixed, on which at least a first bearing (3, 29), into which the support pin (6, 23, 47) and the sealing means (5, 24, 46) are inserted, is mounted.

## Description

The present invention generically refers to an industrial and/or stall machine for fleshes processing.

More in particular, the invention concerns a bone saw, which can be made of stainless steel and/or anodized casting aluminium, whose structure is assembled in such a way as the inner components can present an average life extremely longer than the structures of the bone saws of the traditional type.

The traditional bone saws present a self-bearing structure made of anodized casting aluminium and a casing, provided with door and work top made of stainless steel; moreover, they generally include one or more operating motors, a flesh pushing support, a partition element, a leftovers picker accessible by the outside, scrape devices, an electronic keyboard and various safety devices, such as a microswitch on the lid and/or a blade-cover.

Two calibrated pulleys (an upper and a lower one) for moving the blade are also provided and, in particular, the upper pulley is self-tensioning and can be easily and precisely adjusted both in height and horizontal and/or vertical slope, in order to allow a reliable adhesion of the blade.

Most modern bone saws allow, then, an ease cleaning of all the components thanks to the special construction tricks, such as the housing of the electrical parts in the rear of the machine and/or facilitated removal of the blade, upper pulley and pulley support, which may occur simply by loosening two knobs, a surface free of obstructions being available. However, all the bone saws currently on the market mount one or two bearings, suitable for the rotation and movement in general of the blade, in the upper pulley, leading to the drawback that those bearings, even if mechanically protected, are always subject to aggressive external agents, such as blood, water and other washing detergents (chlorine, ammonia, etc.) that are usually sprayed on the structure of the bone saw with jets at high pressure and temperature.

In this context it is clear that the bearings provided inside the pulley have a very short life.

Purpose of the current invention is therefore to overcome the abovementioned drawbacks and, especially, to provide a machine for fleshes processing, such as, specifically, a bone saw, which presents an average life longer than that one of the bone saws of the traditional type. Other purpose of the invention is to create a machine for fleshes processing, such as a bone saw, which allows to perform periodic maintenance in a simple and rapid way and which is easily accessible from the outside by a user and/or by maintenance technicians, allowing also to perform cleaning operations in an extremely easy and accurate manner.

Further purpose of the invention is to devise a machine for fleshes processing, such as a bone saw, which is extremely reliable and safe and whose use results considerably economical, compared with the bone saws currently on the market.

These and other purposes are achieved by a machine for fleshes processing, such as a bone saw, according to the claim 1 attached.

Other technical features of detail are described in the subsequent claims.

Advantageously, according to the present invention, it is provided to remove the bearings, which are normally present inside the upper pulley for the moving of the blade, and position them inside a protected area of the machine body, in order to avoid aggression of external washing and/or cleaning agents, which usually causes the rapid wear and tear of the aforesaid bearings and subsequent replacement of the same in short terms.

In this way, it is possible to use the same bearings for a substantially longer time period, compared to the bone saws currently on the market, thus reducing maintenance and operation costs of the machine.

Further purposes and advantages of the present invention will result clear from the description that follows, referring to a preferred, but not limited to, embodiment of the machine for fleshes processing, such as in particular a bone saw, which is the object of the present invention, and from the appended drawings, likewise provided for purely illustrative and not limited purpose, in which:
- figure 1A shows a partial exploded view of a machine for fleshes processing, in particular a bone saw, of the traditional type;
- figure 1B shows a rear and partial perspective view of the machine for fleshes processing, in particular a bone saw, of the traditional type of figure 1A;
- figure 2 shows a partial exploded view of a first embodiment of the machine for fleshes processing, in particular a bone saw, according to the present invention;
- figure 3 shows a partial and partially sectioned perspective view of the machine for fleshes processing, in particular a bone saw, of figure 2, according to the present invention;
- figure 4 shows a first and enlarged perspective view of the particular of the machine of figure 3, according to the present invention;
- figure 5 shows a second and enlarged perspective view of the particular of figure 4, according to the present invention;
- figure 6 shows a partial exploded view of a further embodiment of the machine for fleshes processing, in particular a bone saw, according to the present invention;
- figure 7 shows a first and enlarged perspective view of a particular of the machine of figure 6, according to the present invention;
- figure 8 shows a second and enlarged perspective view of the particular of figure 7, according to the present invention.

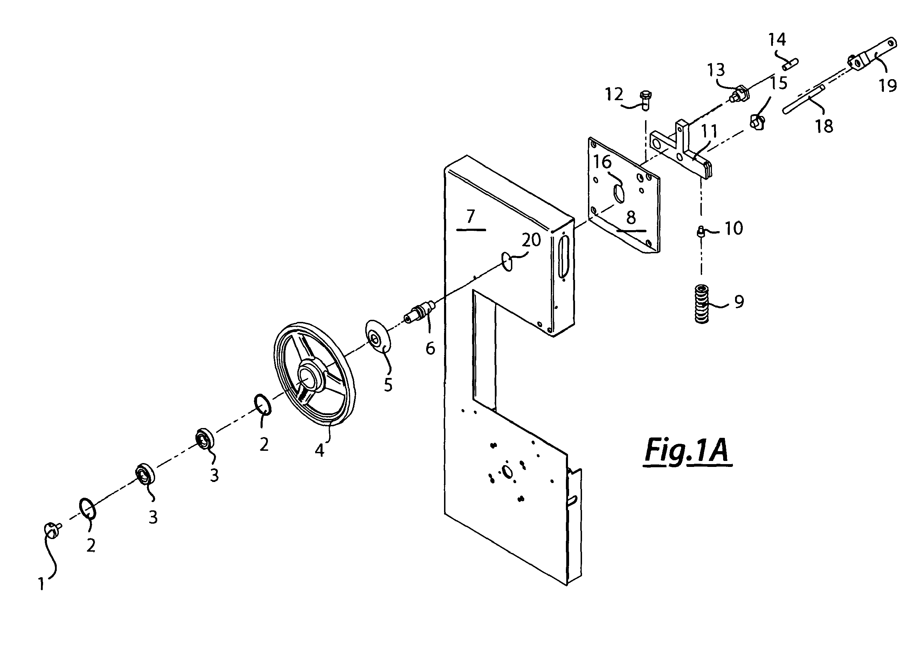

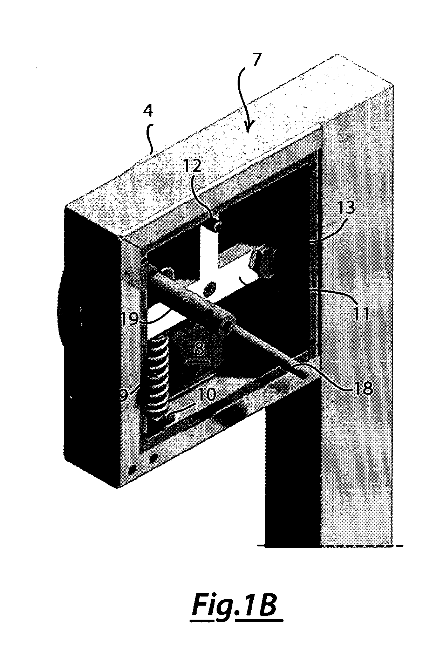

With particular reference to the mentioned figures 1A and 1B, referring to a bone saw of the kind currently on the market, such a machine for fleshes processing presents a motor fixed in the bottom of the structure (not shown in the figures) and an upper pulley 4, which is mounted oscillating in order to allow removal of the blade for cleaning or replacement.

The pulley 4 mounts inside two bearings 3 held in place by two "Seeger" rings 2 and is fixed to the support pin 6 and blocked by the locking screw 1; in addition, the gasket 5 acts as a seal on the slot hole 20 made in the machine body 7.

The support pin 6 is screwed to the support element 11 of the pulley 4, which element is hinged, through the pin 13, on the plate 8 which, in turn, is inserted into the machine body 7, with the slot hole 16 corresponding to the hole 20 of the machine body 7.

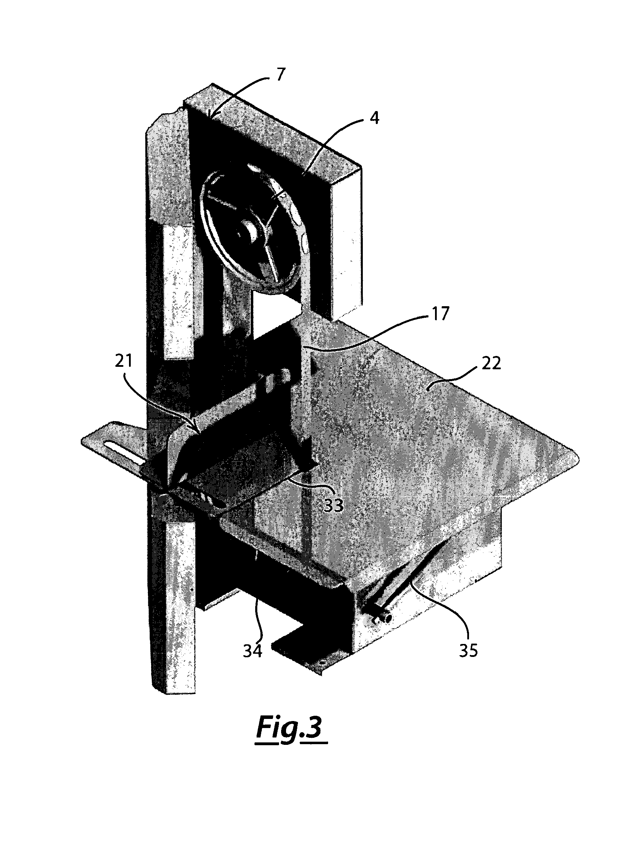

In such a way, thanks also to the action of the spring 9, fixed to the support element 11 through the peg 10, the support element 11 can oscillate vertically as a result of the operation of the cam 19 which, in turn, is fixed to the plate 8 by the pin 15 and integral with the lever 18. Practically, when the operator wishes to loosen the tension of the blade 17 (visible in the enclosed figure 3), connected with the pulley 4, in order to replace the blade 17 and/or ease the cleaning of the machine, he needs to handle the lever 18 and pull it towards himself; as a consequence, the cam 19 rotates and causes the lowering of the support element 11 and, in practice, of the entire pulley 4.

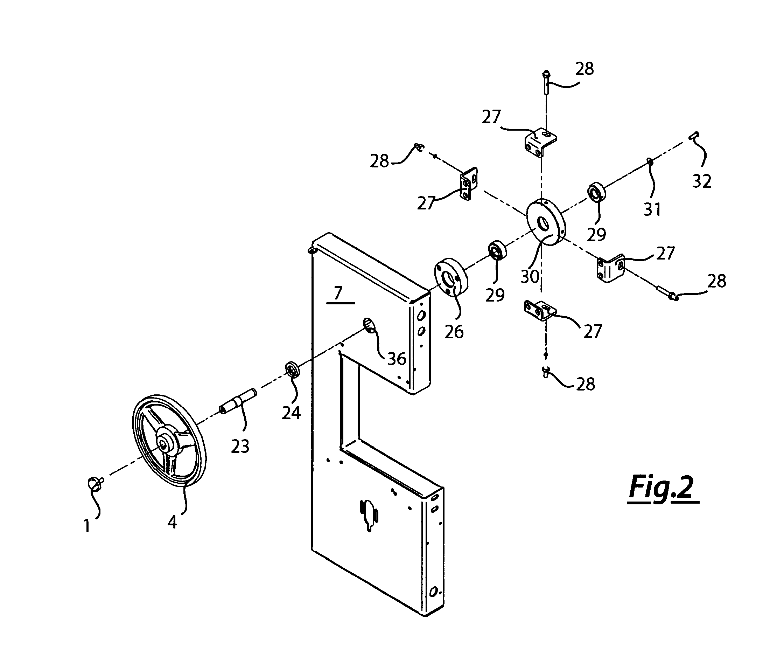

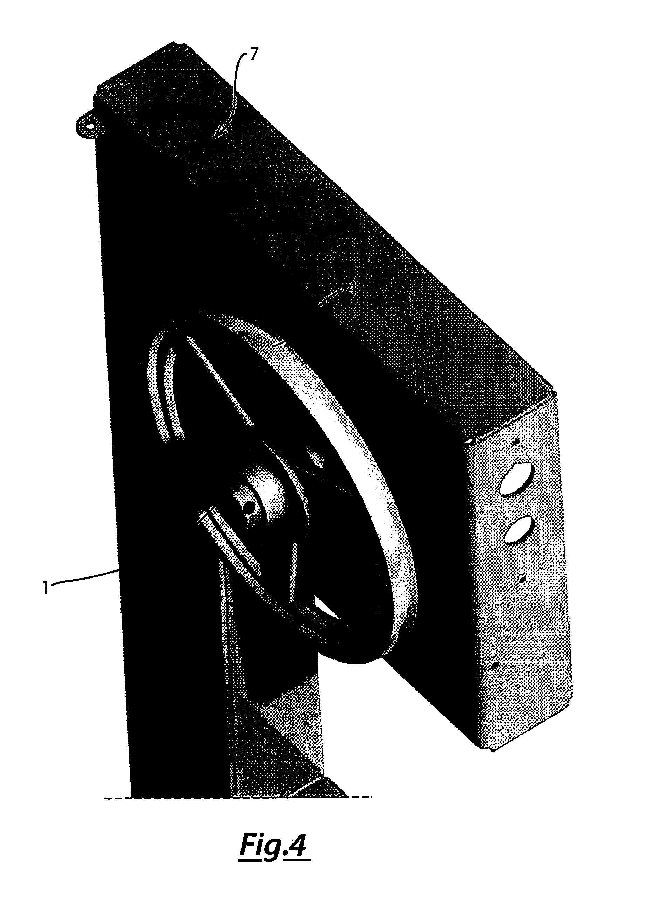

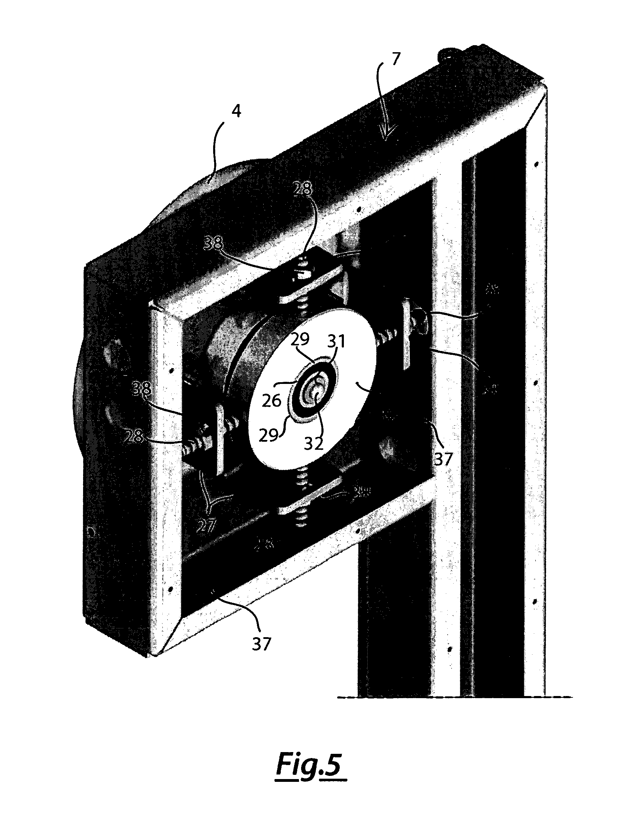

With reference to figures 2-5, which refer to a first embodiment of a bone saw made in accordance with the present invention (where the same components present in figures 1A and 1B have the same numerical references), a pusher and/or partition element of the work in progress flesh in indicated with 21, a work top is indicated with 22 provided with insert 33 of guide of the blade 17, a lower pulley for dragging the blade 17 is indicated with 34, a release lever of the self-tensioning blade 17 is indicated with 35, while a machine body, onto which the upper pulley 4 and lower pulley 34 are mounted, is indicated with 7, similarly to what described in figures 1A and 1B.

Unlike a traditional machine, the bone saw which is the object of the present invention presents the upper pulley 4 fixed, while the operating motor of the blade 17, arranged at the lower pulley 34 and not shown in detail in the figures attached, is of the oscillating type, so as to allow removal of the blade 17.

This constructive solution also allows to maintain a fixed pin 23 to support the upper pulley 4, blocked by the locking screw 1; by mounting the seal ring 24 on the pin 23, the certainty of getting a hermetic seal to fluids, which could drain from the opening 36 of the machine body 7, is also achieved.

In practice, from operator's side, the area at which dirtiness and external agents accumulate more, a simple pulley 4 is mounted, at the opening 36, by means of the locking screw 1.

The motor of the machine is mounted on a sledge, allowing it to go up and down vertically, through the operation of the lever 35, in order to release the blade 17 from tensioning.

Furthermore, the upper pulley 4 is mounted directly on the pin 23 and blocked by the screw 1.

A flange 26 which is fixed to the body 7 through three threaded prisoners, is inserted into the machine body 7, at the upper pulley 4, while a first oscillating bearing 29, into which the pin 23 is slipped passing through the seal ring 24, is mounted on the flange 26.

A further flange 30, within which a second oscillating bearing 29 is mounted, is also coupled with the flange 26 and the whole assembly is inserted into the pin 23 and secured with the washer 31 and screw 32. The flange 30 can be adjusted vertically and/or horizontally by four threaded grains 28 which may be, in turn, screwed or unscrewed by means of respective bolts 28 bounded to relative four brackets 27; each of these brackets 27 is what's more fixed to a respective inner side 37 of the machine body 7.

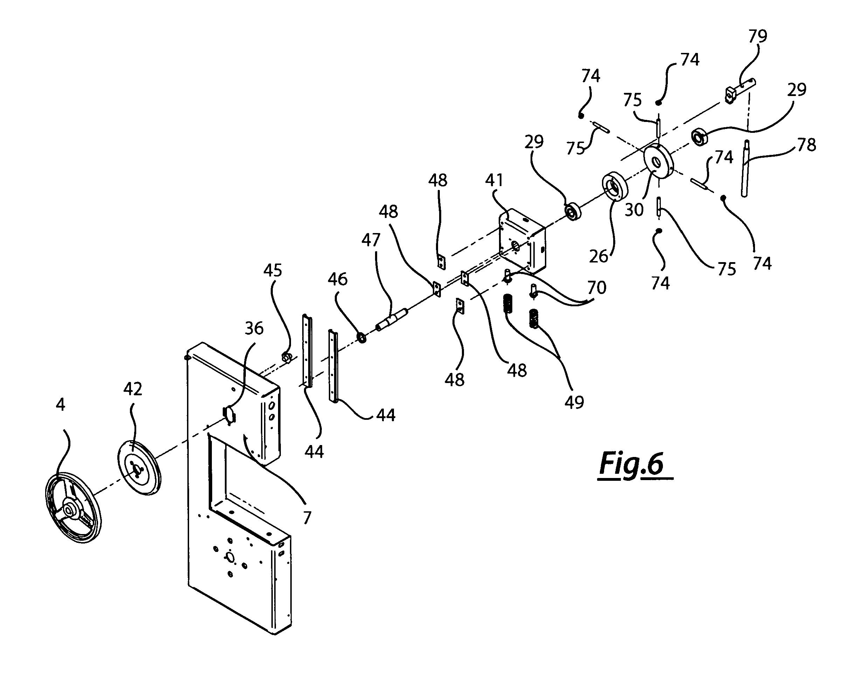

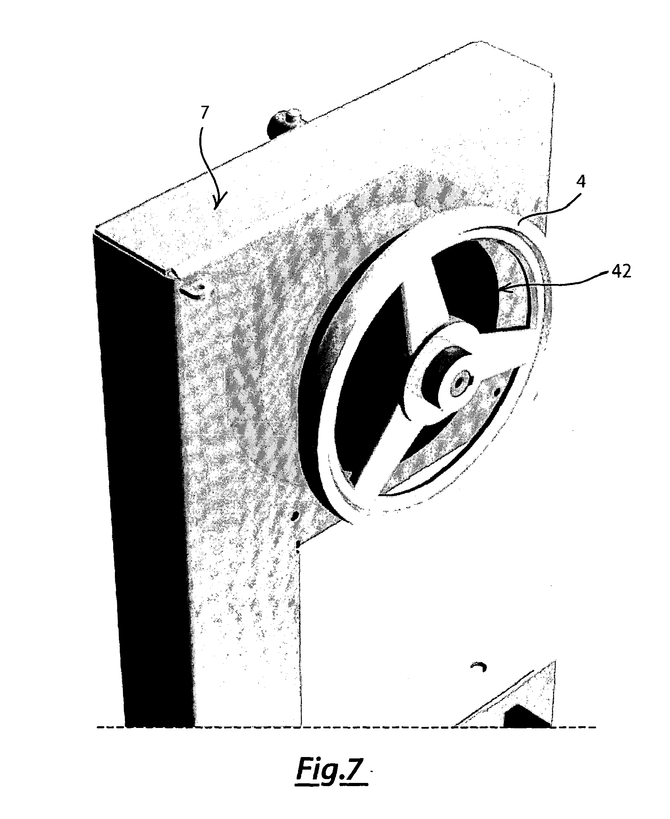

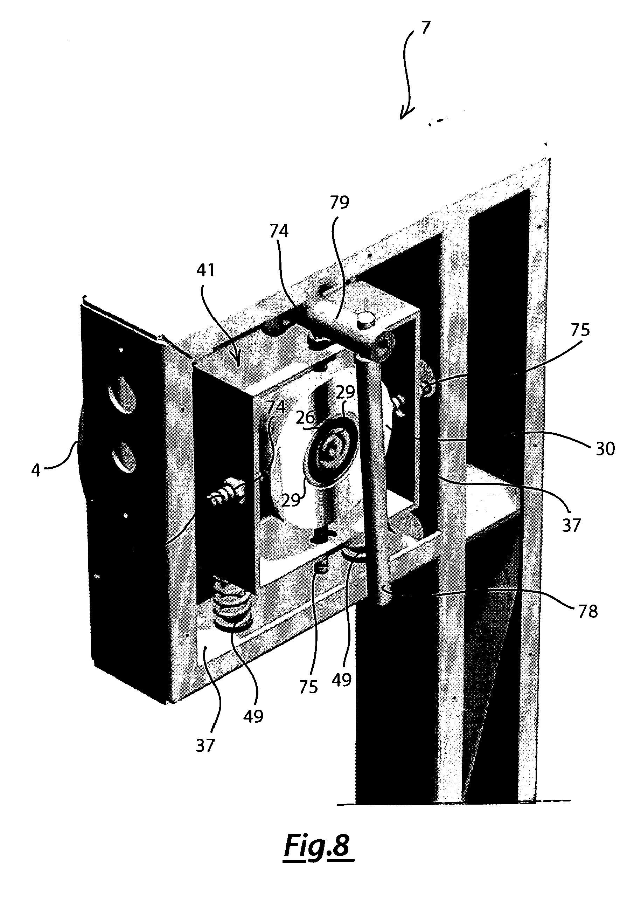

In further embodiments of the bone saw, according to the present invention, it is envisaged using a motor fixed and transporting the portion oscillating for tensioning the blade 17 at the top of the bone saw (as shown in detail in the attached figures 6-8, where the same components of figure 2 have the same references).

Even in this case, the bearings 29 are mounted on the flanges 26 and 30 which, however, in turn, are fixed to the support slide 41.

Two inner slides 44, on which the sliding blocks 48 are made sliding, are fixed, through the screws 45, to the machine body 7 and the slide 41 is fixed, through the sliding blocks 48, to the slides 44, so as to be able to shift along the vertical axis, in order to allow, through the springs 49, tensioning of the blade 17 of the bone saw; the screws 70 serve to increase or decrease tensioning of the blade 17.

Cam 79, operable by the operator through the lever 78, serves to lower the slide 41 and thus loosen tensioning of the blade 17, while grains 75 and nuts 74 provide adjustment of the flange 30 and, consequently, pulley 4 in the horizontal and vertical direction; indeed, the flange 26 is fixed on the support slide 41, while the flange 30, being movable, can shift the pin 47 which, in turn, shifts the pulley 4.

Cover 42 provides protection against water splashing and, being integral with the support slide 41, can shift vertically; the seal ring 46, which ensures the seal on the pin 47, is also mounted on the cover 42.

It is clear that in both embodiments described, in accordance with the present invention, the bearings 3 have been removed from the inside of the pulley 4 and, according to the invention, are now present inside the machine body 7; such a structure allows thereby to preserve the oscillating bearings 29 by the aggression of external agents, such as water, blood and/or chemical detergents (chlorine, ammonia, etc.) that can be sent to the body 7 even at high pressure and/or temperature during machine washing.

The features of the machine for fleshes processing, such as in particular a bone saw, which is the object of the present invention, as well the resulting benefits, are clear from the description made.

In particular, they are represented by:
- components which can be easily and quickly unlocked and removed in order to favour cleaning;
- possibility of complete washing of the machine using water jets and/or detergent solution even at high pressure and/or temperature;
- guide-blade insert incorporated into the work top;
- manual lever release system of the self-tensioning blade;
- possibility of inserting a pushing group and/or a positioning group of the fleshes;
- use of safety devices;
- maximum easiness and precision in pulley adjustment, which allows a reliable adhesion of the blade;
- easy cleaning thanks to confinement of the electric parts in the rear of the machine;
- extension of the average life of the oscillating bearings compared to the known art;
- reduction of components maintenance and/or replacement interventions compared to the known art;
- maintenance and operating costs reduced compared to the traditional type bone saws.

It is, finally, clear that many other variations may be made to the abovementioned machine for fleshes processing, without departing from the principle of novelty intrinsic in the inventive idea expressed here, as it is clear that, in the practical implementation of the invention, materials, shapes and sizes of the illustrated details can be any, as needed, and replaced with others technically equivalent.

## Claims

1. Machine for fleshes processing, such as, in particular, a bone saw, basically comprising:
• operating means of at least one blade (17), positioned on at least one pulley (4, 34) and passing within a work top (22);
• a machine body (7), to which said at least one pulley (4, 34) is fixed, by means of at least one support pin (6, 23, 47) inserted into at least one opening (20, 36) of said machine body (7) together with sealing means (5, 24, 46), and by means of at least one locking element (1), fixed onto said at least one pulley (4, 34) from the part of the machine at operator's disposal,
**characterized in that** at least a first flange (26, 30), on which at least a first bearing (3, 29) is mounted, is fixed inside said machine body (7), from the part opposite to that one at operator's disposal.

2. Machine as claim 1, **characterized in that** said first bearing (3, 29) is of the oscillating type and said support pin (6, 23, 47) is inserted into said first bearing (3, 29) passing through said sealing means (5, 24, 46).

3. Machine as claim 1, **characterized in that** said pulley (4, 34) is positioned above said machine body (7) and is mounted directly on said support pin (6, 23, 47), on which at least one seal ring (24) is mounted.

4. Machine as claim 1, **characterized in that** said operating means are of the oscillating type, in order to remove said blade (17) and/or release said blade (17) from tensioning.

5. Machine as claim 1, **characterized in that** at least a first flange (26, 30) is fixed to said machine body (7) through a plurality of threaded prisoners.

6. Machine as claim 1, **characterized in that** at least a second flange (26, 30), within which at least one second bearing (3, 29) is mounted, is coupled with said at least a first flange (26, 30), said support pin (6, 23, 47) being inserted into said second bearing (3, 29) passing through said sealing means (5, 24, 46).

7. Machine as claim 6, **characterized in that** said second flange (26, 30) is adjustable in vertical and/or horizontal direction through adjustment means (27, 28, 38, 74, 75) fixed to said machine body (7).

8. Machine as claim 1, **characterized in that** said operating means are of the fixed type and relative guides for the sliding of respective sliding blocks (48), which are associated with at least one support slide (41), to which at least said first flange (26, 30) is fixed, are fixed to said machine body (7) so that said slide (41) moves at least vertically, in order to allow, through the action of elastic elements (49) placed between said slide (41) and the machine body (7), the tensioning of the blade (17) of the bone saw.

9. Machine as claim 8, **characterized in that** said slide (41) is operated by the operator, through at least one lever (78) which acts on at least one cam (79).

10. Machine as claims 6 and 8, **characterized in that** said second flange (26, 30) is fixed on said support slide (41), while said first flange (26, 30) is mobile and is able to operate at least one pin (47), which is coupled with said pulley (4).

11. Machine as claim 8, **characterized in that** a protective cover (42) is integral with said support slide (41), mounted below said pulley (4) and suitable to move vertically.

12. Machine as claim 1, **characterized in that** said work top (22) is provided with at least one insert (33) of guide of said blade (17), said blade (17) being positioned on at least a first pulley (4), fixed to said machine body (7) above said work top (22), and on at least a second pulley (34), fixed to said machine body (7) below said work top (22).
